# EUROPEAN PATENT SPECIFICATION

(11) **EP 1 567 410 B1**
(45) Date of publication and mention of the grant of the patent: **23.02.2011**
(21) Application number: 03811049.0
(22) Date of filing: 10.11.2003
(51) Int. Cl.: B63B 21/00

(54) **MOORING SYSTEM FOR OFFSHORE FISH PRODUCTION**
VERANKERUNGSSYSTEM FÜR OFFSHORE-FISCHPRODUKTION
SYSTEME D'AMARRAGE DESTINE A L'AQUACULTURE EN MER

(30) Priority: 10.11.2002 IL 15272202
(43) Date of publication of application: 31.08.2005
(73) Proprietor: Subflex Ltd, Kfar Hess (IL)
(72) Inventor: ZEICHNER, Noam, 40692 Kfar Hess (IL); BEN-ELIAHU, Omri, 45815 Bney-Dror (IL)
(74) Representative: Messulam, Alec Moses
(86) International application number: PCT/IL2003/000935
(87) International publication number: WO 2004/043777

(56) References cited:
- EP-A- 0 146 518
- WO-A-00/49858
- WO-A-97/38573
- WO-A-98/06254
- US-A- 4 257 350
- US-A- 4 380 213
- US-A- 4 957 064
- US-A- 5 172 649
- US-A- 5 251 571

## Description

### Field Of The Invention

The present invention relates to a system for growing fish in the open sea, and to a method of refloating a system of fish cages.

### Background of the invention

Typically, waves apply the prominent environmental load onto offshore installations. Ocean waves are observed as lateral waves that propagate over the free surface-the surface that separates the water from the atmosphere. However, aside from changing the water surface elevation, waves also induce orbital currents and accelerate water particles deep below the free surface. The diameter of the circular motion of particles in the sea surface is equal to the wave height-vertical height between wave trough and wave crest. The orbit diameter decreases further down the deeper water, and at a depth of about half a wavelength, motion is almost completely vanished.

The parameters of an extreme wave, with an average return period of about 50 years, in the Mediterranean Sea at the shores of Israel, are as follows :

Significant wave height (average height of the one-third highest waves in a sample)-about 8 meters. Maximum single wave height-about 16 meters. Peak period, namely the wave period at which the wave spectrum (a function describes the energy-frequency distribution) has a maximum-about 16 seconds. Wavelength corresponds to peak period-about 400 meters. Typically, the orbital velocity induced by waves is significantly greater than the speed of currents. However, currents are an important factor in the determination of anchoring load applied by cages because of their slow variation in time relative to the fast variation of wave-induced velocities. Flexible anchoring (long ropes) allows decreasing wave influence on anchoring loads since the water displacements induced by waves are limited. Loads applied by currents are not dependent upon the rigidity of anchoring, hence must be reacted by the anchoring system.

The current force exerted on sea structures is a drag force that can be assessed through empirical equations. In general the drag force is proportional to the seawater density, to the current speed squared, and to the area of the cross-section of the element, perpendicular to the flow. The ratio of the drag force to the product of these three parameters is defined as a drag coefficient. The drag coefficient is geometrically dependent on the body, and is usually found in experiments. More precisely, the drag coefficient is also weakly dependent upon speed, so the force is not exactly proportional to the squared speed of the current.

Velocity of water in waves is not constant speed and the water particles accelerate and decelerate. In addition to drag force related to speed, an inertia force will also act upon a submerged body in waves. For bodies that are small in relation to wavelength, one can assess the inertia forces by a simple engineering formula, wherein the inertia force is proportional to the acceleration of water particles to the seawater density, and to the immersed volume. The ratio of the inertia force to the product of these three parameters is defined as the inertia coefficient, which is dependent upon the geometric shape of the body. The inertia coefficient may be interpreted as the mass of water whose acceleration was prevented due to the presence of a body, and is also termed hydrodynamic mass. Wave force applied to small bodies relative to wavelength can be estimated by superposition of drag and inertia forces on the elements that comprise the structure.

Cages for growing fish are known in the art. They are typically placed in calm fiords or bays that present no extreme sea conditions, hazardous to the cages and facilitate convenient maintenance. As the fiord is contaminated by the fish cages and industrial pollution the cages can be moved to a less contaminated site in the bay or fiord. Thus, cage builders developed cages for near-shore locations and calm waters. Most cages are built to resist wave energy up to specific level, most of these systems are multiple mooring systems.

There have been attempts, conducted in various countries, such as the USA and European countries, to introduce diving systems that can operate in 35-meter sea depth, to avoid mechanical stress of a heavy sea. When a storm occurs, pulleys are used to lift or submerge the cages. These systems are sensitive and fail where maintenance is insufficient. In such known systems, each cage has its own mooring system.

In the case of short storm notice or a technical problem with one of the many pulleys the system fails. It is impossible to operate the pulleys in rough sea conditions.

The need to operate open sea caging systems led to cages constructed as boats or huge rigid floats. These systems fight the sea effectively but the cage nets fold by the storm and the fish choke to death.

Other designs tend to build floating systems with rigid frames these are very complex, expensive to purchase and operate and dangerous to operate since the divers enter the cages below sea level.

Several aspects are to be considered when planning to grow fish in offshore cages.

Biological aspect - The aim of the cages is to offer a suitable environment for growing fish and with this in mind the cages must be properly designed.

Environmental aspect - To preserve the natural environment any negative impact, the farm may present, must be minimized.

Operational and economic aspect - Operation must be simplified, set up and operation costs curbed so that the farm will be profitable.

Mechanical aspect - Safe anchoring and structural integrity of an offshore cage system must be ensured along with biological and operational cost effective considerations.

Current forces acting upon nets is discussed in: "Current Forces on Cage and Net Deflection", by Jan V. Aarsen, Geir Lland, and Harard Rudi, MARINTEK, Norway, Engineering of Offshore Fish Farming, Glasgow, October 1990. The article presents an algorithm for estimating current forces, by means of empirical formulas fitted to the results of hydraulic laboratory experiments with models of net panels.

US 4,257,350, which discloses the features in the preamble of the appended Claim 1, teaches a method and device for practicing aquaculture in the open sea which basically comprises a bow net means of rigid construction having means permitting it to float in a partially submerged condition or fully immersed in the water without touching the bottom of the sea. The bow net means includes constant-buoyancy tanks and variable-buoyancy tanks, the latter being adapted to be filled with either air or water.

For the structure to withstand adverse sea conditions and yet maintain minimal costs it is preferable to kinetically comply with the surrounding sea rather than try to oppose it. Flexible cages are energy absorbers while rigid cages are simpler to submerge. The more energy that a cage can absorb and the simpler it is to submerge, the better the cage.

### Summary of the invention

According to the present invention, there is provided a system for growing fish in the open sea, comprising a frame, a fish cage connected to the frame, flexible ballasts suspended below the cage, an anchor, a mooring rope connecting said frame to said anchor, and at least one float for marking the position of the system; wherein at least one construction element of the system is hollow and at least one valve is provided to allow water and air to be selectively admitted into the hollow construction element so as to vary the buoyancy of the element, characterised in that the frame is connected to at least two fish cages, at least one set of flexible elongate members connects the fish cages in series with one another and to said frame; and a buoy is connected to the mooring rope for moderating the tension in the mooring rope.

### Brief description of the drawings

The invention will now be described further, by way of example, with reference to the accompanying drawings, in which :
Fig. 1 is a schematic isometric drawing of a fish cage system of the invention, indicating some features;
Figs. 2A and 2B are schematic top views showing different stabilizing elements of the fish cage system of the invention;
Fig. 3 is a schematic isometric drawing of the fish cage system of the invention showing the rope system;
Fig. 4 is a schematic side view showing the operating and submersion positions of a system of the invention;
Fig. 5A is a schematic drawing of a submerged fish cage to which a marker buoy has been connected; and
Fig. 5B is a schematic drawing of a refloated fish cage showing the surfacing of the secondary float.

### Detailed description of the preferred embodiment(s)

The present invention provides a cage system for fish culture. In the following description the term fish relates to all kinds of sea dwelling animals such as fish, sea food, and crustaceans used as food. The system is single point mooring device in which the fish cages, typically numbering two to five, are arranged serially, fastened to a flexible structure well fitted for absorbing heavy sea energy. The system is connected to the anchor via a flexible mooring rope, and a rope tension moderating buoy, allowing free movement in the water, as limited by the length of the rope and other physical obstacles.

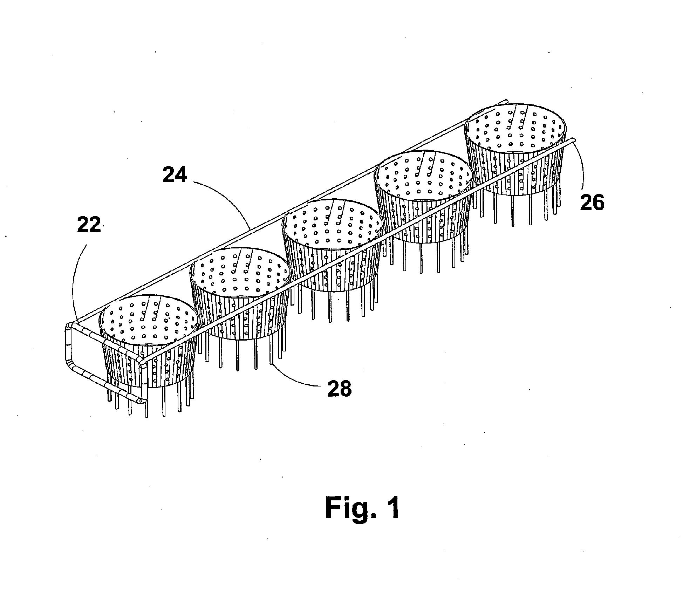

In Fig. 1, to which reference is now made, some features of the system are shown. Front frame (FF) 22 is a metal construction element, preferably a hollow tube, connected to two longitudinal pipes 24 and 26. These pipes are made of flexible plastics material, typically polyethylene. In a preferred embodiment of the invention, the lumen of the front frame 22 and the longitudinal pipes is connected to allow free passage of air or fluid. Five fish-cages in the form of closed fish cages are enclosed within the front frame and the longitudinal pipes 24 and 26. A plurality of ballasts, such as ballasts 28, hang down from the fish cages.

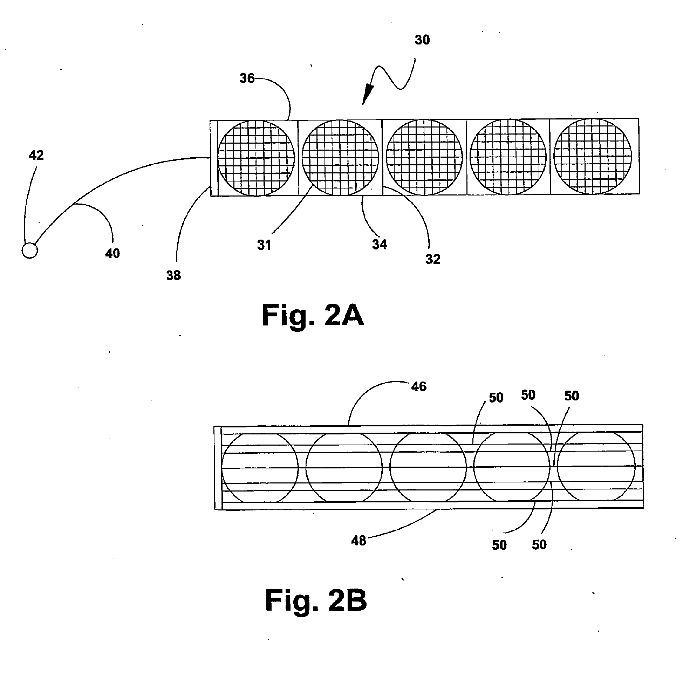

Further details of variations of the system are shown in reference to Figs. 2A and 2B. In top-side view 2A, the system 30 holds five fish cages such as fish cage 31, which are separated by an optional constructional element 32 which hold the two ropes 34 and 36 apart. The front frame 38 is tied via a mooring rope 40 to a rope tension moderating buoy 42.

In Fig. 2B another embodiment of the system is shown, in which longitudinal pipes 46 and 48 are disposed, the functionality of which will be explained later, and in addition longitudinal ropes 50 are connected to the fish cage hangers (not shown) for holding the fish cages together and in connection to the front frame.

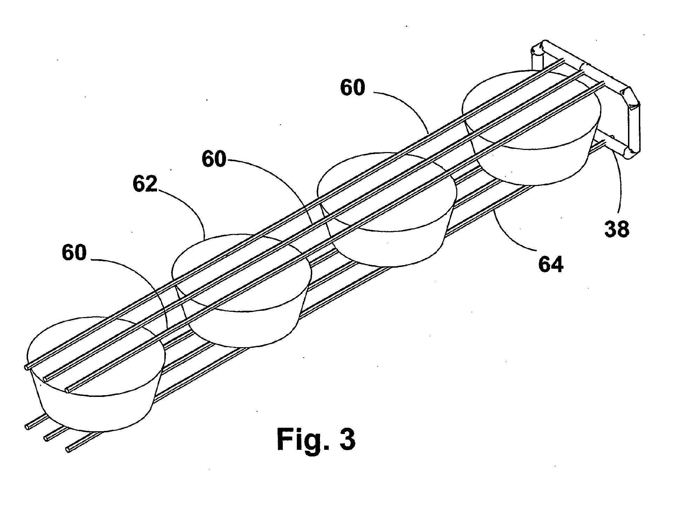

In Fig. 3, to which reference is now made, longitudinal ropes 60 are disposed at the top side of the fish cage 62, and a second set of ropes 64 is disposed at the bottom side of the fish cages. Each rope set is tied to the front frame 38 and to the fish growing cages. In this drawing, the longitudinal pipes are not drawn. The term "rope" in this respect is a generalized term meaning any flexible connecting chord such as made from fibres, metal fibres, plastics fibres or chains.

### Submergence and reflotation

The fish cage system is relatively stable owing to mechanical features. Each fish cage, including its ballasts is substantially neutral with respect to its own buoyancy. The whole system is stabilized by a weight associated with the front frame. The fish cage system includes several sets of hanging ballasts. A first set are the ballast hanging from the fish cages. These ballasts are flexible preferably constructed of metal chains hanging from the nets. Another set of hanging ballasts hangs from the front frame, and another optional set hangs from the longitudinal pipes downwards. The system of fish cages are submerged to a depth of few tens of meters, in preparation for a storm. The mechanical energy absorbed by the system is substantially smaller at such depths than at the sea surface.

To submerge the cage system, water is made to fill some hollow elements of the system. The front frame, being a tube, has a valve to allow sea water in and out. The longitudinal pipes if present are also made to be filled with water. When these constructions are filled with water, the cage system can sink. The dimensions of these constructions, and the material from which they are constructed, must be calculated to permit the submergence of the system upon filling of the constructions with water.

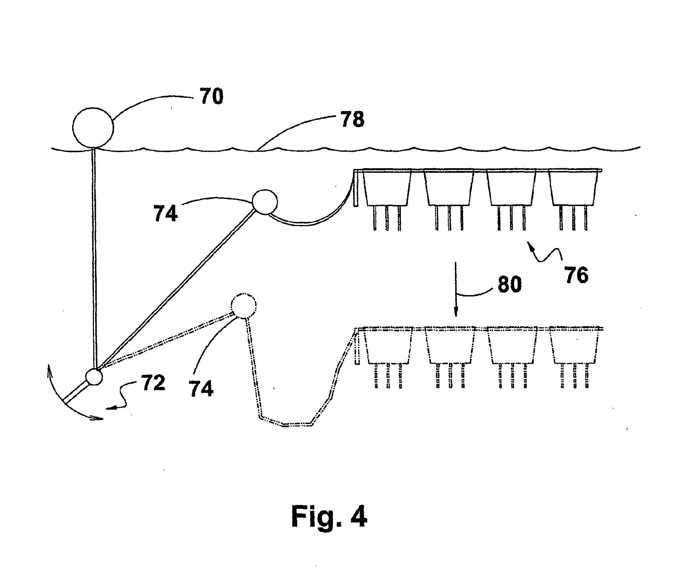

In Fig. 4 two different buoys are described in a side view of the system. A marker float 70 is connected directly to anchor 72 to mark the system generally. Rope tension moderating buoy 74 connects to the cage system through a rope, which is tied to the front frame. At position 76 the cage system is close to the sea surface 78. As it is lowered in the direction of arrow 80, the system (drawn in phantom lines) can reach the bottom such that floats at the bottom of the net may fold (not shown). Buoy 74 is typically lowered substantially at this position too.

In preparation for sinking the system of cages to the depth, additional marker buoys or floats are connected to each cage, to mark its place from above.

When refloating the cages, hoses are connected to valves in the construction elements containing water, typically the front frame and the longitudinal pipes, and air is pumped in, pushing water out of these elements. In a preferred embodiment of the invention, long hoses are connected to the appropriate opening in the relevant construction elements, prior to the submerging. Each loose end is designated by a buoy so that it can be found easily to be connected to the air source. Pumping air causes a gradual increase in air in the system which facilitates a careful raising of the cages, and safe repositioning in the normal operating zone.

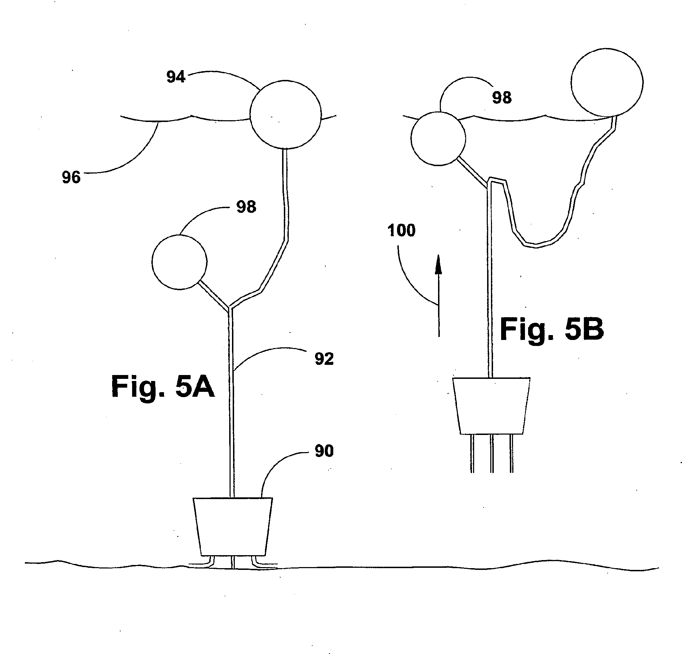

Since the cages of the system can be submerged in depth, some types of fish may need to be acclimatised to the change in water pressure on the way up. To assist in this process, extra floats are provided as described in Figs. 5A and 5B to which reference is now made.

In these figures only one fish cage is shown for the sake of simplicity. The submerged system is shown in Fig. 5A showing the fish cage 90. Rope 92 connects to the fish cage marker float 94 floating at or near the sea surface 96 and to a secondary float 98. In Fig. 5B the cage has risen in the direction of arrow 100, so that secondary float 98 appears on the surface. At this stage the lifting is stopped until the decompression stage is over and the cages can be lifted to the final position, typically by pumping air into the longitudinal pipes..

### Uses of the system of the invention

The cage system can withstand substantially adverse open sea conditions. The system of the invention is operational in sea water in which water depth is 35-80 meter (or more). It is resistant and can take storms of rough sea as it can be conveniently submerged to escape from the storm. When the system is submerged, all that is left to be seen on the sea surface is a small float or a few buoys, to mark the location of the system when sea is calm again. Mooring circle of each system to the neighboring system is calculated in the same manner as boat mooring.

## Claims

1. A system for growing fish in the open sea, comprising:
a frame (22),
a fish cage (62) connected to the frame (22),
flexible ballasts (28) suspended below the cage,
an anchor (72),
a mooring rope connecting said frame (22) to said anchor (72), and
at least one float (80) for marking the position of the system;
wherein at least one construction element of the system is hollow and at least one valve is provided to allow water and air to be selectively admitted into the hollow construction element so as to vary the buoyancy of the element,
**characterised in that**
the frame (22) is connected to at least two fish cages (62),
at least one set of flexible elongate members (24, 26) connects the fish cages in series with one another and to said frame (22); and
a buoy (74) is connected to the mooring rope for moderating the tension in the mooring rope.

2. A system as claimed in claim 1, wherein at least one of the flexible elongate members (24, 26) connecting the fish cages (62) to the front frame (22) is constructed as a hollow pipe which serves as a water fillable construction element.

3. A system as claimed in claim 1 or 2, wherein said flexible ballasts (28) comprises of metal chains suspended at least from said cages (62).

4. A system as claimed in any preceding claim,
wherein all said water fillable construction elements are interconnected so as to allow direct fluid flow through their respective lumens.

5. A system as claimed in any preceding claim, in which each fish cage, including its ballasts, has a substantially neutral buoyancy.

6. A system as claimed in any preceding claim, in which a secondary float (98) is provided on a line connected to the marker float (94) to act as a depth marker, the secondary float (98) being surfacing when the cages rise above a predetermined depth.

7. A method of refloating a system of fish cages as claimed in claim 5, when submerged in the open sea, comprising the steps of pumping air into the hollow construction elements until said secondary float surfaces; waiting until the fish in the fish cages have decompressed, and further pumping air into the hollow construction elements until the fish cages have risen to the desired operational depth.

## Patentansprüche

1. Ein System zum Züchten von Fischen im offenen Meer, bestehend aus:
einem Gestell (22),
einem Fischkäfig (62), der mit dem Gestell (22) verbunden ist,
flexiblem Ballast (28), der unter dem Käfig hängt,
einem Anker (72),
einem Haltetau, welches das genannte Gestell (22) mit dem genannten Anker (72) verbindet, und
zumindest einem Schwimmer (80) zur Markierung der Position des Systems;
wobei zumindest ein Konstruktionselement des Systems hohl ist und zumindest ein Ventil vorgesehen ist, um selektiv Wasser und Luft in das hohle Konstruktionselement einzulassen, damit der Auftrieb des Elements variiert werden kann,
**dadurch gekennzeichnet, dass**
das Gestell (22) mit mindestens zwei Fischkäfigen (62) verbunden ist,
zumindest ein Satz an flexiblen, länglichen Streben (24, 26) die Fischkäfige nacheinander miteinander und mit dem genannten Gestell (22) verbindet; und
ein Schwimmer (74) an dem Haftetau angeschlossen ist, um die Spannung im Haltetau abzuschwächen.

2. Ein System entsprechend Anspruch 1, wobei zumindest eine der flexiblen, länglichen Streben (24, 26), die die Fischkäfige (62) vorne am Gestell (22) befestigt, als Hohlrohr angelegt ist, das als wasserbefüllbares Konstruktionselement dient.

3. Ein System entsprechend Anspruch 1 oder 2, wobei der genannte flexible Ballast (28) aus Metallketten besteht, die jedenfalls von den genannten Käfigen (62) hängen.

4. Ein System entsprechend einem der vorhergehenden Ansprüche, wobei alle genannten wasserbefüllbaren Konstruktionselemente miteinander verbunden sind, damit Flüssigkeit direkt durch ihr jeweiliges Lumen fließen kann.

5. Ein System entsprechend einem der vorhergehenden Ansprüche, bei dem jeder Fischkäfig, einschließlich seines Ballasts, einen mehr oder weniger neutralen Auftrieb hat.

6. Ein System entsprechend einem der vorhergehenden Ansprüche, bei dem ein zweiter Schwimmer (98) an einer mit dem Markierungsschwimmer (94) verbundenen Leine vorgesehen ist, um als Tiefenmarkierung zu fungieren, wobei der zweite Schwimmer (98) an die Oberfläche tritt, wenn die Käfige über eine vorbestimmte Tiefe aufsteigen.

7. Eine Methode zum erneuten Flottmachen eines Systems von Fischkäfigen entsprechend Anspruch 5, wenn sie im offenen Meer unter Wasser sind, bestehen aus den folgenden Schritten, nämlich Pumpen von Luft in die hohlen Konstruktionselemente, bis der zweite Schwimmer an die Oberfläche tritt, Warten, bis die Fische in den Fischkäfigen dekomprimiert sind, und weiterem Pumpen von Luft in die hohlen Konstruktionselemente, bis die Fischkäfige in die gewünschte Betriebstiefe aufgestiegen sind.

## Revendications

1. Système pour l'élevage de poissons en haute mer comprenant :
un cadre (22),
une cage d'élevage de poissons (62) connectée au cadre (22),
des ballasts flexibles (28) suspendus en-dessous de la cage,
et une ancre (72),
une corde d'amarrage connectant ledit cadre (22) à ladite ancre (72), et
et au moins un flotteur (80) pour marquer la position du système ;
dans lequel au moins un élément de construction du système est creux et au moins une valve est prévue pour permettre à l'eau et à l'air d'être sélectivement admis dans l'élément de construction creux de manière à varier la flottabilité de l'élément,
**caractérisé en ce que**
le cadre (22) est connecté à au moins deux cages d'élevage de poissons (62),
au moins un ensemble de membres flexibles allongés (24, 26) se connecte aux cages d'élevage de poissons en série l'un avec l'autre et audit cadre (22) ; et
une balise flottante (74) est connectée à la corde d'amarrage afin de modérer la tension dans la corde d'amarrage.

2. Système selon le procédé de la revendication 1, dans lequel au moins l'un des membres flexibles allongés (24, 26) connectant les cages d'élevage de poissons (62) au cadre avant (22) est construit sous la forme d'un tuyau creux qui sert d'élément de construction remplissable d'eau.

3. Système selon le procédé de la revendication 1 ou 2, dans lequel lesdits ballasts flexibles (28) comportent des chaînes de métal suspendues au moins à partir desdites cages (62).

4. Système selon le procédé de l'une des revendications précédentes, dans lequel tous lesdits éléments de construction remplissables d'eau sont interconnectés pour permettre l'écoulement direct de l'eau à travers leurs lumières respectives.

5. Système selon le procédé de l'une quelconque des revendications précédentes, dans lequel chaque cage d'élevage de poissons, y compris ses ballasts, possède une flottabilité sensiblement neutre.

6. Système selon l'une quelconque des revendications précédentes, dans lequel un flotteur secondaire (98) est prévu sur une ligne connectée au flotteur pour ligne d'eau (94) pour faire fonction de planchette de mesure de profondeur, le flotteur secondaire (98) faisant surface lorsque les cages montent au-delà d'une profondeur prédéterminée.

7. Procédé de remise en flottabilité d'un système de cages d'élevage de poissons selon le procédé de la revendication 5 lorsqu'elles sont submergées dans la haute mer, comprenant les étapes de pompage d'air dans les éléments de construction creux jusqu'à ce que ledit flotteur secondaire face surface ; d'attente que les poissons contenus dans les cages d'élevage soient décompressées, et de pompage d'air supplémentaire dans les éléments de construction creux jusqu'à ce que les cages d'élevage de poissons aient monté jusqu'à la profondeur opérationnelle désirée.
